# EUROPÄISCHE PATENTSCHRIFT

(11) **EP 0 604 644 B1**
(45) Veröffentlichungstag und Bekanntmachung des Hinweises auf die Patenterteilung: **18.09.1996**
(21) Anmeldenummer: 93917589.9
(22) Anmeldetag: 16.07.1993
(51) Int. Cl.: F24J 2/06

(54) **Verfahren und Vorrichtung zur Erzeugung von Nutzwärme aus konzentrierter Sonnenstrahlung**
Method and apparatus for generating available heat from concentrated solar radiation
Méthode et dispositif de génération de la chaleur utile de la radiation solaire concentrée

(30) Priorität: 18.07.1992 DE 4223779
(43) Veröffentlichungstag der Anmeldung: 06.07.1994
(73) Patentinhaber: L. & C. Steinmüller GmbH, D-51641 Gummersbach (DE)
(72) Erfinder: KEINTZEL, Günter, D-51766 Engelskirchen (DE); SCHMITZ-GOEB, Manfred, D-51643 Gummersbach (DE); FRICKER, Hans, W., CH-8544 Rickenbach (CH)
(74) Vertreter: Carstens, Wilhelm, Dipl.-Phys.
(86) Internationale Anmeldenummer: EP9301877
(87) Internationale Veröffentlichungsnummer: WO9402788

(56) Entgegenhaltungen:
- DE-A- 2 948 355
- US-A- 4 312 324
- US-A- 4 777 934

## Beschreibung

Die Erfindung betrifft ein Verfahren und eine Vorrichtung zur Erzeugung von Nutzwärme aus konzentrierter Sonnenstrahlung, bei der ein Luftstrom durch einen von der Sonnenstrahlung erwärmten Absorber eines Luftreceivers geführt und dabei erwärmt wird, der erwärmte Luftstrom unter Abfuhr der Nutzwärme, insbesondere unter Dampferzeugung, abgekühlt wird und zumindest ein Teil des abgekühlten Luftstroms in einer Vielzahl von Teilströmen auf die Anströmseite des Adsorbers zurückgeführt.

Aus der CH-Z "Technische Rundschau Sulzer" 3/1989, S. 9 - 14, insbesondere Bild 10, ist ein derartiges Verfahren, bzw eine solche Solaranlage bekannt, bei der die nicht vollständig abgekühlte Luft aus dem Dampferzeuger in eine Warmluftkammer vor dem Absorber geleitet wird. Von dort strömt sie durch geeignete Düsen in Richtung Absorber. Es wird darauf hingewiesen, daß z. B. 60 % der nicht vollständig abgekühlten Warmluft dem Kreislauf wieder zugeführt werden können. Eine vergleichbare Anordnung ist aus der EP 399 381 A1 bekannt, bei der die Außenkanten des Absorbers ebenfalls von einer Warmluftkammer umgeben sind. Bei dieser Anordnung ist vor der Rückführluft noch ein einen Wärmeverlust vermeidender und nach außen abströmender Schutzluftstrom vorgesehen.

Zur Technologie eines Luftreceivers wird darüberhinaus noch auf die EP 124 769 B1 verwiesen.

Bei dem bekannten Verfahren wird also angestrebt, die durch Abfuhr von Nutzwärme, insbesondere der Dampferzeugung, abgekühlte Luft, die immer noch einen nennenswerten Anteil an fühlbarer Wärme hat, dem Receiver möglichst vollständig wieder zuzuführen, so daß die durch ihn hindurch angesaugte Luft schon vorgewärmt wird. Bei beiden bekannten Anordnungen ist um den Absorber herum ein Warmluftkanal angeordnet, von dem aus die warme Rückführluft in Richtung auf die von der Sonne bestrahlte Oberfläche des Receivers geblasen wird. Bei den bekannten Anordnungen ist es schwierig, die rückgeführte Warmluft entsprechend dem sich auf dem Absorber einstellenden Strahlungsintensitätsprofil über die gesamte Receiveroberfläche zu verteilen, insbesondere, wenn bei Betrieb der Anlage ein starker Wind herrscht und/oder die Anströmfläche des Absorbers relativ groß ist. Es ist davon auszugehen, daß bei einer Solaranlage mit einer Dampf leistung von 100 MWₜₕ der Receiver einen Durchmesser von ca. 15 m aufweisen muß.

Es ist daher die Aufgabe der vorliegenden Erfindung, ein Verfahren und eine Vorrichtung der gattungsgemäßen Art anzugeben, bei dem, bzw. der eine vorgebene Verteilung der rückgeführten Luft über die Anströmfläche des Receivers erreicht wird, ohne daß dessen Wirkungsgrad hinsichtlich der Umwandlung der Sonnenstrahlung in Wärme wesentlich beeinflußt wird.

Diese Aufgabe wird dadurch gelöst, daß die Teilströme des Rückführstroms im Gegenstrom zu dem Kaltluftstrom ohne Vermischung mit demselben von der Abströmseite des Absorbers her in vorgegebener Verteilung durch den Absorber geführt und auf der Anströmseite des Absorbers in Richtung auf die Anströmseite umgelenkt werden.

Auf diese Weise wird eine vorgegebene Verteilung der rückzuführenden Luft über die gesamte Anströmfläche des Receivers erreicht, ohne daß durch Verteilungseinrichtungen wesentliche Teile der Anströmfläche bezüglich der Sonneneinstrahlung abgedunkelt werden, gleichzeitig wird die Rückführluft in nächster Nähe der Anströmseite ausströmen und von dort in den Receiver eingesaugt. Kaltluft aus der Umgebung wird ganz wesentlich an einem Einströmen in den Receiver gehindert.

Naturbedingt stellt sich über die Oberfläche des Receivers ein Strahlungsintensitätsprofil mit unterschiedlicher Strahlung ein. Es ist daher von Vorteil, wenn bei gleichmäßiger Verteilung der Teilströme über die Anströmseite der Rückführluftstrom in Teilströme unterschiedlicher Stärke aufgeteilt wird, um die Rückführluft in erforderlichen Volumina an die Stellen zuführen, wo sie für die Wärmeabfuhr gebraucht werden. Eine Anpassung kann auch durch eine ungleichmäßige Verteilung gleich starker Teilluftstörme erreicht werden.

Falls von dem Receiver neben der rückgeführten Luft auch noch ein wesentlicher Teil an Kaltluft angesaugt wird, kann unter Umständen die Umlenkung der Teilströme alleine durch den Unterdruck des durch den Absorber gesaugten Kaltluftstroms erfolgen. Bei dem angestrebten Ziel, möglichst wenig Kaltluft anzusaugen und nur Rückführluft im Kreis zu fahren, ist es jedoch zweckmäßig, wenn jeder aus der Anströmfläche des Absorbers austretende Teilstrom einer Zwangsumlenkung unterzogen wird.

Zu einer besonders einfachen Ausgestaltung einer Solaranlage zur Durchführung des Verfahrens gelangt man, wenn in dem den Absorber haltenden Gehäuse des Luftreceivers in Strömungsrichtung des erwärmten Luftstroms gesehen hinter den Absorber und im vorgegebenen Abstand von demselben ein die Fläche des Absorbers abdeckender Rückführverteiler angeordnet ist, dessen in vorgegebener Weise, vorzugsweise im wesentlichen gleichmäßig verteilten Austrittsöffnungen jeweils ein sich bis zur Anströmseite des Absorbers erstreckendes Rückführrohr zugeordnet ist.

Dann ist es weiterhin zweckmäßig, daß der Austrittsöffnung eines jeden Rückführrohrs eine Umlenkeinrichtung zugeordnet ist; diese ist vorzugsweise gleichzeitig als Strahlungsschutzeinrichtung für den Austritt des Rückführrohrs ausgebildet, falls das Rohr nicht strahlungsbelastbar ist.

In bevorzugter Weise ist die Umlenkeinrichtung als Umlenkpilz ausgestaltet, dessen Stiel auf die Mitte der Austrittsöffnung des Rückführrohrs ausgerichtet ist. Der Pilz kann massiv ausgebildet sein. Es ist jedoch auch denkbar, daß der Pilz einen Hut mit einem luftdurchlässigen Absorbermaterial aufweist und der Stiel als Hohlstiel mit dem Raum auf der Abströmseite des Absorbers verbunden ist. Auf diese Weise wird zum einen der Austritt des Rückführrohres vor der Strahlung geschützt, zum anderen erfolgt eine optimale Ausnutzung der Einstrahlung, da die über dem Pilzkopf erwärmte Luft in den Heißluftstrom stromab der Abströmseite des Absorbers einführbar ist.

Eine einfachere Form der Umlenkeinrichtung erhält man, wenn diese als mit Abstand von der Austrittsöffnung des Rückführrohrs angeordnete Platte ausgebildet ist.

Die Umlenkeinrichtung kann aus einem strahlungsundurchlässigen Material, wie z. B. einer hochwarmfesten Keramik, oder einem zumindest strahlungsteildurchlässigen Material, wie z. B. Quarzglas bestehen.

Bei Verwendung einer strahlungsdurchlässigen Umlenkeinrichtung kann zweckmäßigerweise in den Austritt des Rückführrohres ein Stopfen aus Absorbermaterial eingebracht sein, da auf diese Weise die Einstrahlung auf den Querschnitt des Rohraustrittes ebenfalls ausgenutzt wird.

Gemäß der CH-Z "Technische Rundschau Sulzer", S. 12, rechte Sp. 1. Abs., kann der Absorber aus quadratischen Absorbermodulen hergestellt aus Drahtgewebestreifen oder dergleichen aufgebaut werden, wobei zu jedem Absorbermodul ein auf der Abströmseite angeordnetes Lochblech gehört, dessen Öffnungen die Luftmenge bestimmen, die das Absorbermodul durchsetzt. Hierdurch ist eine weitere Anpassungsmöglichkeit an das Strahlungsintensitätsprofil gegeben.

Bei einer solchen Anordnung ist es von Vorteil, wenn die Rückführrohre gleichzeitig als Halteelemente für die Absorbermodule eingesetzt werden. Zum Anpassen der Teilströme an die durch das Strahlungsprofil determinierte Luftmenge, können mit den Rückführluftverteiler Rückführrohre unterschiedlichen Durchmessers verbunden werden oder es werden in die Austrittsöffnungen von Rückführrohren gleichen Durchmessers Düsen mit unterschiedlichen Bohrungen eingesetzt. Gruppenweise können die Rohre natürlich Düsen gleichen Durchmessers tragen.

Der Rückführluftverteiler kann vorzugsweise aus einem das Gehäuse des Luftreceivers durchsetzenden und sich radial im Gehäuse erstreckenden Luftzufuhrrohr und sich quer zu ihm tannenbaumartig erstreckenden Querrohre besteht, wobei in dem Luftzufuhrrohr und in den Querrohren Austrittsöffnungen in vorgegebener, vorzugsweise gleichmäßiger Verteilung vorgesehen sind. Selbstverständlich sind andere Ausführungsformen denkbar, z. B. können mehrere Luftzufuhrrohre vorgesehen sein, die jeweils nur einen Sektor des Gehäusequerschnitts gleichmäßig speisen.

Die Erfindung soll nun anhand der beigefügten FIG. 1 - 4 näher erläutert werden.

Es zeigt:
- FIG. 1: einen Längsschnitt, durch einen erfindungsgemäßen Luftreceiver,
- FIG. 2: einen Teilschnitt in Blickrichtung der Pfeile II - II in FIG. 1,
- FIG. 3: eine vergrößerte Teildarstellung eines Rückführrohres mit zugeordnetem Umlenkpilz,
- FIG. 4: eine Darstellung vergleichbar FIG. 3 mit einer Umlenkplatte,
- FIG. 5: eine Darstellung vergleichbar FIG. 4, wobei in den Austritt des Rückführrohres ein Absorberstopfen eingesetzt ist und
- FIG. 6: eine Solaranlage mit pilzförmiger Umlenkeinrichtung, die eine höhere Strahlungsausnutzung ermöglicht.

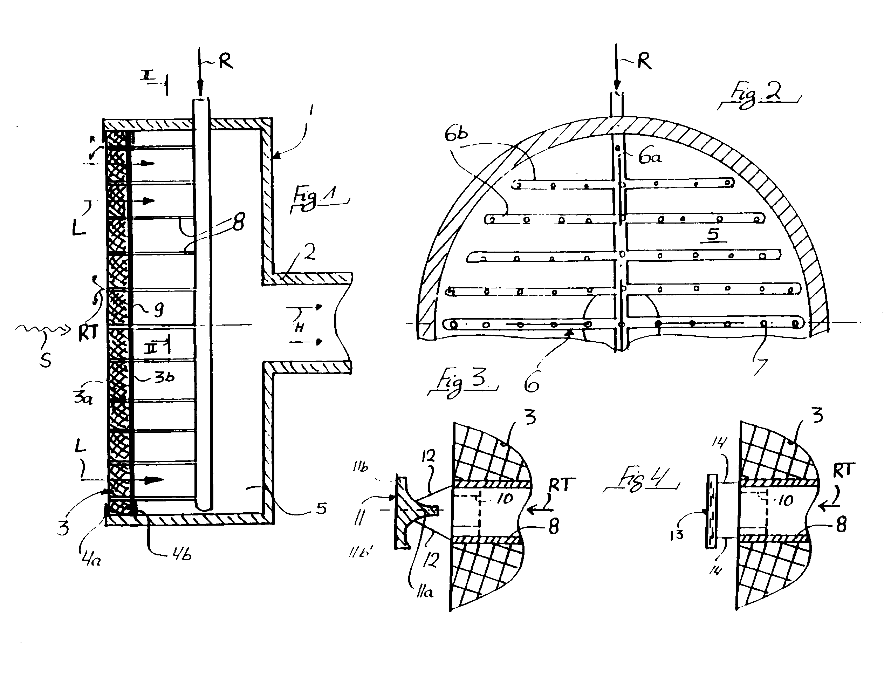

Gemäß FIG. 1 weist der Luftreceiver 1 ein Gehäuse 2 auf, an dessen Stirnseite ein Absorber 3 mittels einer Halterung 4a, 4b gehaltert ist, der einerseits von der einfallenden Sonnenstrahlung S erwärmbar ist und der von einem angesaugten Luftstrom L durchsetzt werden kann. Hinter dem Absorber 3 ist eine Kammer 5 ausgebildet, aus der die vom Absorber erwärmte Heißluft H abgesaugt werden kann. Die abgesaugte Heißluft H wird einem Wärmetausch unterzogen, z. B. in einem nicht gezeigten Dampferzeuger, und es wird zumindest ein Teilstrom der im Wärmetauscher nicht vollständig abgekühlten Luft als Rückführluft R zurückgeführt. Die Rückführluft R wird einem mit Abstand vom Absorber 3 im Gehäuse 2 angeordneten Luftverteiler 6 zugeführt. Der Luftverteiler 6 besteht aus einem die Heißluftsammelkammer 5 radial durchsetzenden Zentralrohr 6a und einer Vielzahl von astartig vom Zentralrohr 6a ausgehenden Zweigrohren 6b, wobei in dem Zentralrohr 6a und in dem Zweigrohren 6b Bohrungen 7 abgeordnet sind derart, daß eine im wesentlichen gleichförmige Verteilung der Bohrungen 7 über den Querschnitt der Heißluftsammelkammer 5 erreicht wird. Mit jeder der Bohrungen ist ein Luftrückführrohr 8 verbunden, das zunächst ein Lochblech 9, das der Abströmseite 3b des Absorbers zugeordnet ist, durchsetzt und sich dann durch den Absorber hindurch bis zu dessen Anströmseite 3a hin erstreckt. Die Rückführluftteilströme RT, die aus den Rückführrohren 8 austreten, werden auf die Anströmseite 3a zu umgelenkt.

Die Rückführrohre 8 sind in der FIG. 1 mit gleichem Durchmesser dargestellt. Falls bei gleichmäßiger Verteilung unterschiedliche Volumenströme an die verschiedenen Stellen des Receivers werden sollen, können Rohre unterschiedlichen Durchmessers verwendet werden, wobei bezogen auf das sich einstellende Strahlungsintensitätsprofil im mittigen Bereich der Anströmfläche 3a Rohre größeren Durchmessers und im äußeren Bereich Rohre kleineren Durchmessers eingesetzt werden. Es ist auch möglich, bei Rohren gleichen Durchmessers in die Rohre Düseneinsätze 10 mit unterschiedlicher Bohrungsweite einzusetzen, wie sie gestrichelt in den FIG. 3 bzw. 4 dargestellt sind.

Wenn die Rohre 8 starr mit dem Luftverteiler verbunden sind, der in sich eine feste Struktur darstellt, können die Rohre 8 als Halteelemente für den Absorber verwendet werden, insbesondere wenn dieser in an sich bekannter Weise aus einzelnen Absorbermodulen besteht.

Um die Umlenkung des durch das Rohr 8 herangeführten Teilstroms der Rückführluft R auf die Anströmseite 3a zu verbessern, kann - wie in der FIG. 3 dargestellt - vor der Austrittsöffnung des Rohres ein Umlenkpilz 11 vorgesehen sein, der über geeignete Stege 12 am Rohr abgestützt ist. Der Stiel lla ist der Austrittsöffnung des Rohres 8 zugeordnet. Gemäß der FIG. 3 kann der Kopf des Pilzes llb so gestaltet sein, daß eine 90° Umlenkung erfolgt, oder der Kopf 11b' kann so gestaltet sein, daß eine Umlenkung von > 90° erfolgt. (Beide Kopf gestaltungen sind möglich). Wegen der mit hoher Flächenbelastung einfallenden Sonnenenergie ist der Pilz vorzugsweise aus einer hochwarmfesten Keramik hergestellt.

Bei geeigneter Materialwahl können die Stege 12 oder Halterungen 14 als Rippen zur Wärmerückfuhr dienen, da sie konvektiv von der Rückführluft gekühlt werden.

Bei der Ausführungsform gemäß FIG. 4 ist dem Austrittsende des Rohres 8 als Umlenkeinrichtung eine durchsichtige Quarzplatte 13 zugeordnet, die mittels Halterungen 14 am Rohr 8 befestigt ist. Da die Platte 13 für die Strahlung durchlässig ist, schattet sie keine Bereiche des Absorbers ab. In diesem Falle müßte das Rohr aus einem strahlungsbelastbaren Material, wie Keramik bestehen oder es müßte zumindest das Austrittsende des Rückführrohres anderweitig durch eine Zwangskühlung geschützt werden.

Es muß festgehalten werden, daß die den Absorber durchsetzenden Rückführrohre zwar einen Teil des Absorbervolumens gegenüber dem Volumen beim Stand der Technik verdrängen, jedoch wird durch die Vergleichmäßigung der Verteilung der rückgeführten Luft insgesamt eine Wirkungsgradverbesserung der Solaranlage erreicht.

Wie die FIG. 5 zeigt, ist es jedoch möglich, bei Verwendung einer strahlungsdurchlässigen Umlenkeinrichtung 13 durch Einbringen eines Stopfens 15 aus Absorbermaterial den obigen Verdrängungseffekt zu verringern.

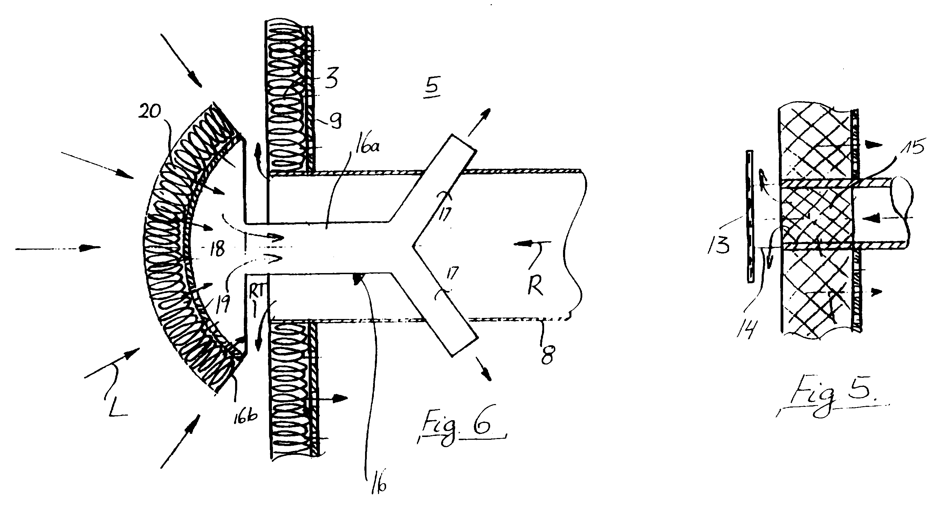

In der FIG. 6 ist eine pilzförmige Umlenkeinrichtung 16 dargestellt, deren hohler Stiel 16a in die Austrittsseite des Rückführrohres 8 eingreift und mittels zweier Rohrabschnitte 17, die die Wand des Rückführrohres von innen nach außen durchsetzen, in Strömungsverbindung mit der Heißluftsammelkammer 5 steht. Der hohle Stiel 16 ist mit einer Heißluftsammelkammer 18 im Kopf 16b des Pilzes verbunden. Die Decke der Sammelkammer 18 wird von einem kalottenförmig ausgebildeten Lochblech 19 gebildet, auf dessen Außenseite ein Absorbermaterial 20 vergleichbar dem Absorber 3 aufgebracht ist. Durch diese Anordnung wird zum einen die Austrittsöffnung des Rückführrohres 8 vor der Strahlung geschützt, zum anderen wird die Strahlung von einem Absorber erfaßt. Die durch den Kopf eingesaugte Luft wird erwärmt und über die Zweigrohre 17 in die Heißluftsammelkammer abgeführt.

## Patentansprüche

1. Verfahren zur Erzeugung von Nutzwärme aus konzentrierter Sonnenstrahlung, bei der ein Luftstrom (L) durch einen von der Sonnenstrahlung (S) erwärmten Absorber (3) eines Luftreceivers (1) geführt und dabei erwärmt wird, der erwärmte Luftstrom (H) unter Abfuhr der Nutzwärme, insbesondere unter Dampferzeugung, abgekühlt wird und zumindest ein Teil (R) des abgekühlten Luftstroms in einer Vielzahl von Teilströmen (RT) auf die Anströmseite des Absorbers (3) zurückgeführt wird,
**dadurch gekennzeichnet**,
daß die Teilströme (RT) des Rückführluftstroms (R) im Gegenstrom zu dem Luftstrom (L) ohne Vermischung mit demselben von der Abströmseite (3b) des Absorbers (3) her in vorgegebener Verteilung durch den Absorber (3) geführt und auf der Anströmseite (3a) des Absorbers in Richtung auf die Anströmseite (3a) umgelenkt werden.

2. Verfahren nach Anspruch 1,
**dadurch gekennzeichnet**,
daß bei gleichmäßiger Verteilung der Teilströme über die Anströmseite (3a) der Rückführluftstrom (R) in Teilströme (RT) unterschiedlicher Stärke aufgeteilt wird.

3. Verfahren nach Anspruch 1 oder 2,
**dadurch gekennzeichnet**,
daß jeder aus der Anströmfläche (3a) des Absorbers austretende Teilstrom (RT) einer Zwangsumlenkung unterzogen wird.

4. Solaranlage zur Durchführung des Verfahrens nach mindestens einem der Ansprüche 1 - 3,
**dadurch gekennzeichnet**,
daß in dem den Absorber (3) enthaltenden Gehäuse (2) des Luftreceivers (1) in Strömungsrichtung des erwärmten Luftstroms (H) gesehen hinter dem Absorber (3) und im vorgegebenen Abstand von demselben eine die Fläche des Absorbers abdeckender Rückführluftverteiler (6) angeordnet ist, dessen in vorgegebener Weise, vorzugsweise in wesentlich gleichmäßig verteilten Austrittsöffnungen (7) jeweils ein sich bis zur Anströmseite (3a) des Absorbers erstreckendes Rückführrohr (8) zugeordnet ist.

5. Solaranlage nach Anspruche 4,
**dadurch gekennzeichnet**,
daß der Austrittsöffnung eines jeden Rückführrohres (8) eine Umlenkeinrichtung (11; 13) zugeordnet ist.

6. Solaranlage nach Anspruche 5,
**dadurch gekennzeichnet**,
daß die Umlenkeinrichtung gleichzeitig als Strahlungsschutzeinrichtung (11) für den Austritt des Rückführrohres (8) ausgebildet ist.

7. Solaranlage nach Anspruche 5 oder 6,
**dadurch gekennzeichnet**,
daß die Umlenkeinrichtung als Umlenkpilz (11) gestaltet ist, dessen Stiel (lla) auf die Mitte der Austrittsöffnung des Rückführrohres (8) ausgerichtet ist.

8. Solaranlage nach Anspruche 7,
**dadurch gekennzeichnet**,
daß der Pilz massiv ausgebildet ist.

9. Solaranlage nach Anspruche 7,
**dadurch gekennzeichnet**,
daß der Pilz einen Hut (16b) mit einem luftdurchlässigen Absorbermaterial (20) aufweist und der Stiel (16a) als Hohlstiel mit dem Raum (5) auf der Abströmseite (3b) des Absorbers verbunden ist.

10. Solaranlage nach Anspruche 5 oder 6,
**dadurch gekennzeichnet**,
daß die Umlenkeinrichtung (13) als mit Abstand von der Austrittsöffnung des Rückführrohrs (8) angeordnete Platte ausgebildet ist.

11. Solaranlage nach mindestens einem der Ansprüche 5 - 10,
**dadurch gekennzeichnet**,
daß die Umlenkeinrichtung (11, 13) aus einem strahlungsundurchlässigen oder einem zumindest strahlungsteildurchlässigen Material besteht.

12. Solaranlage nach mindestens einem der Ansprüche 5 - 11,
**dadurch gekennzeichnet**,
daß bei einer strahlungsdurchlässigen Umlenkeinrichtung (13) in dem Austritt des Rückführrohres (8) ein Stopfen (15) aus Absorbermaterial eingebracht ist.

13. Solaranlage nach mindestens einem der Ansprüche 4 - 12, bei dem der Absorber (3) aus einzelnen Absorbermodulen aufgebaut ist,
**dadurch gekennzeichnet**,
daß die Rückführrohre (8) gleichzeitig als Halteelemente für die Absorbermodule eingesetzt sind.

14. Solaranlage nach mindestens einem der Ansprüche, 4 - 13,
**dadurch gekennzeichnet**,
daß zur Anpassung der Teilströme an das sich einstellende Strahlungsprofil mit dem Rückluftverteiler (6) Rückführrohre (8) unterschiedlichen Durchmessers verbunden sind oder in die Austrittsöffnungen von Rückführrohren (8) gleichen Durchmessers Düsen (10) mit unterschiedlichen Bohrungen eingesetzt sind.

15. Solaranlage nach mindestens einem der Ansprüche 4 - 14,
**dadurch gekennzeichnet**,
daß der Rückluftverteiler (6) aus einem das Gehäuse (2) des Luftreceivers (1) durchsetzenden und sich radial im Gehäuse erstreckenden Luftzufuhrrohr (6a) und sich quer zu ihm tannenbaumartig erstreckenden Querrohren (6b) besteht, wobei in dem Luftzufuhrrohr (6a) und den Querrohren (6b) Austrittsöffnungen (7) in vorgegebener Verteilung vorgesehen sind.

## Claims

1. Process for the generation of useful heat from concentrated solar radiation, with which an air stream (L) is guided through an absorber (3) of an air receiver (1) heated by solar radiation (S) and is heated therewith, the heated air stream (H) is cooled by removing of the useful heat, especially with steam generation, and at least a portion (R) of the cooled air stream is returned in a plurality of partial streams (RT) to the upstream side of the absorber (3), characterized in that the partial streams (RT) of the return air stream (R) are guided in counter flow to the air stream (L) without mixing with it from the down stream side (3b) of the absorber in a predetermined distribution through the absorber (3) and are deflected at the upstream side of the absorber (3a) towards the upstream side (3a).

2. The process according to claim 1, characterized in that in case of uniform distribution of the partial streams over the upstream side (3a) the return air stream (R) is divided into partial streams (RT) of different strengths.

3. The process according to claim 1 or 2, characterized in that each of the partial streams (RT) exiting from the upstream side (3a) of the absorber is subjected to a forced deflection.

4. Solar device for performing the process according to at least one of the claims 1 - 3,characterized in that in the housing (2) of the air receiver (1) containing the absorber (3) a return air distributor (6) is arranged in the direction of flow of the heated air stream (H) behind the absorber (3) and at a predetermined distance from it, wherein the return air distributor (6) covers the face of the absorber, to the outlet openings (7) of the return air distributor distributed in a predetermined manner, especially substantially uniformly, is each coordinated a return pipe (8) extending up to the upstream side (3a) of the absorber.

5. The solar device according to claim 4, characterized in that to the outlet opening of each return tube a deflecting member (11; 13) is associated.

6. The solar device according to claim 5, characterized in that the deflection member is simultaneously embodied as a radiation protecting device (11) for the outlet of the return tube (8).

7. The solar device according to claim 5 or 6, characterized in that the deflecting member is embodied as a deflecting mushroom (11), the leg (11a) of which is aligned with the center of the outlet opening of the return tube (8).

8. The solar device according to claim 7, characterized in that the mushroom is of massive construction.

9. The solar device according to claim 7, characterized in that the mushroom has a head (16b) with an air-permeable absorber material and the leg (16a) is a hollow leg that is connected with the chamber (5) provided on the downstream side (3b) of the absorber.

10. The solar device according to claim 5 or 6, characterized in that the deflection member (13) is embodied as a plate positioned at a distance from the outlet opening of the return pipe (8).

11. The solar device according to at least one of the claims 5 - 10, characterized in that the deflection member (11, 13) is comprised of a radiation-impermeable material or a material that is at least partially radiation-permeable.

12. The solar device according to at least one of the claims 5 - 11, characterized in that for a radiation-permeable deflecting device (13) a plug (15) made of absorber material material is inserted in the outlet of the return pipe (8).

13. The solar device according to at least one of the claims 4 - 12, with which the absorber (3) is comprised of individual absorber modules, characterized in that the return pipes (8) are simultaneously used as holding elements for the absorber modules.

14. The solar device according to at least one of the claims 4 - 13, characterized in that for the adaption of the part streams to the resulting radiation profile return pipes (8) of different diameter are connected to the return air distributor (6) or in the outlet openings of return pipes (8) of identical diameter nozzles (10) of different bores are inserted.

15. The solar device according to at least one of the claims 4 - 14, characterized in that the return air distributor (6) comprised of an air inlet pipe (6a) penetrating the housing (2) of the air receiver and extending radially within said housing and of transverse tubes (6b) extending transverse to the air inlet pipe in form of a Christmas tree, wherein in the air inlet pipe (6a) and in the transverse tubes (6b) outlet openings (7) are provided in a predetermined distribution.

## Revendications

1. Procédé pour produire de la chaleur utile à partir d'un rayonnement solaire concentré, selon lequel un flux d'air (L) est dirigé à travers un absorbeur (3), réchauffé par le rayonnement solaire (S), d'un récepteur d'air (1) et y est réchauffé, le flux d'air réchauffé (H) est refroidi en évacuant la chaleur utile, notamment en produisant de la vapeur, et au moins une partie (R) du flux d'air refroidi est ramenée en une multiplicité de flux partiels (RT) au côté de flux entrant de l'absorbeur (3), **caractérisé** en ce que les flux partiels (RT) du flux d'air recyclé (R) sont, depuis le côté de flux sortant (3b) de l'absorbeur, dirigés dans une répartition prédéfinie à travers l'absorbeur (3) à contre-courant du flux d'air (L) et sans mélange avec ce dernier, et sont, sur le côté de flux entrant (3a) de l'absorbeur, renvoyés en direction du côté de flux entrant (3a).

2. Procédé selon la revendication 1, **caractérisé** en ce que le flux d'air recyclé (R) est divisé en flux partiels (RT) de différents débits avec une répartition uniforme des flux partiels sur le côté de flux entrant (3a).

3. Procédé selon la revendication 1 ou 2, **caractérisé** en ce que chaque flux partiel (RT) sortant de la face de flux entrant (3a) de l'absorbeur est soumis à un renvoi forcé.

4. Installation solaire pour la mise en oeuvre du procédé selon une quelconque des revendications 1 à 3, **caractérisée** en ce qu'un répartiteur d'air recyclé (6) couvrant la surface de l'absorbeur est disposé en arrière, considéré dans la direction d'écoulement du flux d'air réchauffé (H), de l'absorbeur (3) et à une distance prédéfinie de ce dernier dans le carter (2) du récepteur d'air (1) qui contient l'absorbeur (3), un tube de recyclage (8), s'étendant jusqu'au côté de flux entrant (3a) de l'absorbeur, étant respectivement associé aux ouvertures de sortie (7) du répartiteur (6), qui sont réparties d'une manière prédéfinie et, de préférence, essentiellement uniforme.

5. Installation solaire selon la revendication 4, **caractérisée** en ce qu'un dispositif de renvoi (11 ; 13) est associé à l'ouverture de sortie de chaque tube de recyclage (8).

6. Installation solaire selon la revendication 5, **caractérisée** en ce que le dispositif de renvoi est en même temps conçu comme dispositif (11) de protection contre le rayonnement pour la sortie du tube de recyclage (8).

7. Installation solaire selon la revendication 5 ou 6, **caractérisée** en ce que le dispositif de renvoi est configuré en champignon de renvoi (11), dont le pied (11a) est orienté vers le milieu de l'ouverture de sortie du tube de recyclage (8).

8. Installation solaire selon la revendication 7, **caractérisée** en ce que le champignon est réalisé massif.

9. Installation solaire selon la revendication 7, **caractérisé**e en ce que le champignon présente un chapeau (16b) avec un matériau absorbant (20) laissant passer l'air, et le pied (16a), sous forme de pied creux, communique avec la chambre (5) présente sur le côté de flux sortant (3b) de l'absorbeur.

10. Installation solaire selon la revendication 5 ou 6, **caractérisée** en ce que le dispositif de renvoi (13) est réalisé sous la forme d'une plaque disposée à distance de l'ouverture de sortie du tube de recyclage (8).

11. Installation solaire selon une quelconque des revendications 5 à 10, **caractérisée** en ce que le dispositif de renvoi (11; 13) est réalisé en un matériau imperméable au rayonnement ou en un matériau au moins partiellement perméable au rayonnement.

12. Installation solaire selon une quelconque des revendications 5 à Il, **caractérisée** en ce que, dans le cas d'un dispositif de renvoi (13) perméable au rayonnement, un bouchon (15) en matériau absorbant est mis en place dans la sortie du tube de recyclage (8).

13. Installation solaire selon une quelconque des revendications 4 à 12, dans laquelle l'absorbeur (3) est constitué de modules absorbeurs individuels, **caractérisée** en ce que les tubes de recyclage (8) sont utilisés en même temps comme éléments de maintien pour les modules absorbeurs.

14. Installation solaire selon une quelconque des revendications 4 à 13, **caractérisée** en ce qu'afin d'adapter les flux partiels au profil de rayonnement qui s'établit, des tubes de recyclage (8) de diamètres différents sont reliés au répartiteur d'air recyclé (6), ou des buses (10) d'alésages différents sont installées dans les ouvertures de sortie de tubes de recyclage (8) de même diamètre.

15. Installation solaire selon une quelconque des revendications 4 à 14, **caractérisée** en ce que le répartiteur d'air recyclé (6) est constitué d'un tube d'apport d'air (6a) traversant le carter (2) du récepteur d'air (1) et s'étendant radialement dans le carter, et de tubes transversaux (6b) s'étendant transversalement au tube (6a) à la manière d'un sapin, des ouvertures de sortie (7) étant prévues dans une répartition prédéfinie dans le tube d'apport d'air (6a) et les tubes transversaux (6b).
